# EUROPÄISCHE PATENTANMELDUNG

(11) **EP 1 950 452 A1**
(43) Veröffentlichungstag der Anmeldung: **30.07.2008**
(21) Anmeldenummer: 08000758.6
(22) Anmeldetag: 16.01.2008
(51) Int. Cl.: F16F 15/134

(54) **Torsionsschwingungsdämpferanordnung für den Antriebsstrang eines Fahrzeugs**

(30) Priorität: 25.01.2007 DE 102007003677
(71) Anmelder: ZF FRIEDRICHSHAFEN AG, 88038 Friedrichshafen (DE)
(72) Erfinder: Schröder, Arthur, 97456 Hambach (DE)

(57) **Zusammenfassung**

Eine Torsionsschwingungsdämpferanordnung umfasst eine Primärseite (12) und eine vermittels einer Dämpferelementenanordnung (30) zur Drehmomentübertragung mit der Primärseite (12) und zur Drehung bezüglich der Primärseite (12) um eine Drehachse (A) gekoppelte Sekundärseite (22), wobei eine Seite von Primärseite (12) und Sekundärseite (22) ein Zentralscheibenelement (24) umfasst und die andere Seite von Primärseite (12) und Sekundärseite (22) beidseits des Zentralscheibenelements (24) miteinander fest verbundene Deckscheibenelemente (14, 16) umfasst, wobei die Dämpferelementenanordnung (30) eine Mehrzahl von in Umfangsrichtung aufeinander folgenden und sich näherungsweise in Umfangsrichtung erstreckenden Dämpferelementeneinheiten (32) umfasst und wobei an dem Zentralscheibenelement (24) und den Deckscheibenelementen (14, 16) für jede Dämpferelementeneinheit (32) zwei in Umfangsrichtung in Abstand zueinander liegende Abstützbereiche (46, 48, 50, 52) vorgesehen sind, an welchen eine jeweilige Dämpferelementeneinheit (32) mit ihren Umfangsendbereichen (42, 44) abgestützt ist, wobei am Zentralscheibenelement (24) oder/und wenigstens einem Deckscheibenelement (14, 16) bei wenigstens einem der einer jeweiligen Dämpferelementeneinheit (32) zugeordneten Abstützbereiche (46, 48, 50, 52) ein bei Abstützung der Dämpferelementeneinheit (32) an diesem Abstützbereich (46, 48, 50, 52) die Dämpferelementeneinheit (32) gegen Bewegung nach radial außen sichernder Haltevorsprung (56, 56) vorgesehen ist.

## Beschreibung

Die vorliegende Erfindung betrifft eine Torsionsschwingungsdämpferanordnung, umfassend eine Primärseite und eine vermittels einer Dämpferelementenanordnung zur Drehmomentübertragung mit der Primärseite und zur Drehung bezüglich der Primärseite um eine Drehachse gekoppelte Sekundärseite, wobei eine Seite von Primärseite und Sekundärseite ein Zentralscheibenelement umfasst und die andere Seite von Primärseite und Sekundärseite beidseits des Zentralscheibenelements miteinander fest verbundene Deckscheibenelemente umfasst, wobei die Dämpferelementenanordnung eine Mehrzahl von in Umfangsrichtung aufeinander folgenden und sich näherungsweise in Umfangsrichtung erstreckenden Dämpferelementeneinheiten umfasst und wobei an dem Zentralscheibenelement und den Deckscheibenelementen für jede Dämpferelementeneinheit zwei in Umfangsrichtung in Abstand zueinander liegende Abstützbereiche vorgesehen sind, an welchen eine jeweilige Dämpferelementeneinheit mit ihren Umfangsendbereichen abgestützt ist.

Derartige Torsionsschwingungsdämpferanordnungen rotieren im Betriebszustand eines Fahrzeugs um ihre Drehachse, so dass die verschiedenen Komponenten derselben vergleichsweise großen Zentrifugalkräften ausgesetzt werden. Auch die näherungsweise in Umfangsrichtung sich erstreckenden Dämpferlementeneinheiten unterliegen derartigen Zentrifugalkräften, mit der Folge, dass sie vor allem in den zwischen ihren Umfangsendbereichen liegenden Abschnitten fliehkraftbedingt sich gegen die Primärseite oder die Sekundärseite nach radial außen anlegen werden. Dies beeinträchtigt die Entkopplungsqualität, da bei Umfangsbelastung bzw. Umfangsbewegung die Dämpferelementeneinheiten sich gegen die fliehkraftbedingt dann auftretenden Reibkräfte bewegen müssen.

Um diesem Problem entgegenzutreten, ist es aus der DE 43 41 373 C2 bekannt, die als Schraubenfedern ausgebildeten Dämpferelementeneinheiten an verschiedenen Bereichen radial abzustützen. An den Umfangsendbereichen erfolgt dies über Federteller, an welchen einerseits die Schraubenfedern in Umfangsrichtung abgestützt sind und welche selbst andererseits an den Deckscheibenelementen bzw. am Zentralscheibenelement abgestützt sind. Um diese Federteller gegen Radialbewegung zu sichern, weisen sie eine Aussparung auf, in welche ein Vorsprung am Zentralscheibenelement eingreifen kann. In den zwischen den Umfangsendbereichen liegenden Abschnitten der Schraubenfedern sind diese durch reibungsmindernde Gleitschuhe nach radial außen abgestützt, so dass bei Kompression in Umfangsrichtung die zwangsweise auftretenden Reibkräfte minimiert werden können. Diese Maßnahmen sind vor allem bei vergleichsweise langen Dämpferelementeneinheiten bzw. Schraubenfedern vorteilhaft. Werden kürzere, dafür aber mehr Dämpferelementeneinheiten eingesetzt, so beeinträchtigt das Vorsehen der Federteller das in Umfangsrichtung bereitstellbare Federvolumen wesentlich stärker, als in dem Fall, in welchem eine geringere Anzahl, also beispielsweise zwei, Dämpferelementeneinheiten vorgesehen ist.

Es ist die Aufgabe der vorliegenden Erfindung, eine Torsionsschwingungsdämpferanordnung vorzusehen, welche bei einfachem Aufbau ein verbessertes Dämpfungsverhalten bereitstellt.

Erfindungsgemäß wird diese Aufgabe gelöst durch eine Torsionsschwingungsdämpferanordnung, umfassend eine Primärseite und eine vermittels einer Dämpferelementenanordnung zur Drehmomentübertragung mit der Primärseite und zur Drehung bezüglich der Primärseite um eine Drehachse gekoppelte Sekundärseite, wobei eine Seite von Primärseite und Sekundärseite ein Zentralscheibenelement umfasst und die andere Seite von Primärseite und Sekundärseite beidseits des Zentralscheibenelements miteinander fest verbundene Deckscheibenelemente umfasst, wobei die Dämpferelementenanordnung eine Mehrzahl von in Umfangsrichtung aufeinander folgenden und sich näherungsweise in Umfangsrichtung erstreckenden Dämpferelementeneinheiten umfasst und wobei an dem Zentralscheibenelement und den Deckscheibenelementen für jede Dämpferelementeneinheit zwei in Umfangsrichtung in Abstand zueinander liegende Abstützbereiche vorgesehen sind, an welchen eine jeweilige Dämpferelementeneinheit mit ihren Umfangsendbereichen abgestützt ist, wobei am Zentralscheibenelement oder/und wenigstens einem Deckscheibenelement bei wenigstens einem der einer jeweiligen Dämpferelementeneinheit zugeordneten Abstützbereiche ein bei Abstützung der Dämpferelementeneinheit an diesem Abstützbereich die Dämpferelementeneinheit gegen Bewegung nach radial außen sichernder Haltevorsprung vorgesehen ist.

Bei der erfindungsgemäß ausgestalteten Torsionsschwingungsdämpferanordnung sind also die die Dämpferelementeneinheiten in den Umfangsendbereichen gegen Bewegung nach radial außen sichernden Haltevorsprünge unmittelbar am Zentralscheibenelement bzw. Deckscheibenelement vorgesehen. Auf das Bereitstellen von Federtellern kann verzichtet werden, so dass das in Umfangsrichtung zur Verfügung stellbare Federvolumen entsprechend vergrößert werden kann.

Um bei den Dämpferelementeneinheiten in beiden Umfangsendbereichen die Radialsicherungsfunktion vorsehen zu können, wird vorgeschlagen, dass an beiden einer jeweiligen Dämpferelementeneinheit zugeordneten Abstützbereichen jeweils ein Haltevorsprung vorgesehen ist. Die Dämpferelementeneinheiten können jeweils wenigstens eine Schraubenfeder umfassen. Dabei ist vorzugsweise dann vorgesehen, dass die Haltevorsprünge in einen jeweiligen Endbereich der Schraubfedern eingreifen. Die Haltevorsprünge übergreifen dabei also eine oder mehrere Windungen in den Endbereichen der Schraubenfedern und sorgen somit für eine zuverlässige radiale Halterung. Dabei ist vorzugsweise vorgesehen, dass die Haltevorsprünge an einem bezogen auf die Drehachse radial inneren Windungsbereich der Schraubenfedern angreifen.

Zur Einstellung einer gewünschten Dämpfungscharakteristik kann vorgesehen sein, dass wenigstens eine Dämpferelementeneinheit zwei ineinander geschachtelte Schraubenfedern umfasst. Dabei kann dann wenigstens ein dieser Dämpferelementeneinheit zugeordneter Haltevorsprung in die innerste der ineinander geschachtelten Schraubenfedern eingreifen und diese gegen Radialbewegung sichern. Durch die Zusammenwirkung des Haltevorsprungs mit der innersten der ineinander geschachtelten Schraubenfedern wird dann zwangsweise auch jede diese umgebende Schraufenfeder gegen Radialbewegung gesichert, da sie sich bei Fliehkraftbelastung gegen die radial gehalterte innerste Schraubenfeder anlegen wird.

Alternativ kann vorgesehen sein, dass wenigstens ein dieser Dämpferelementeneinheit zugeordneter Haltevorsprung in die äußerste der ineinander geschachtelten Schraubenfedern eingreift und diese gegen Radialbewegung sichert. Auch hier wird durch das Zusammenwirken eines jeweiligen Haltevorsprungs mit der zugeordneten äußersten Schraubenfeder gleichzeitig gleichzeitig auch eine Radialsicherung für die unter Fliehkraftbelastung sich von radial innen gegen die äußerste Schraubenfeder anlegende innerste oder jede darin liegende Schraubenfeder erzielt.

Bei einer weiteren alternativen Ausgestaltungsform kann vorgesehen sein, dass wenigstens einer der Abstützbereiche des Zentralscheibenelements einen ersten Abstützabschnitt für eine äußere der Schraubenfedern und in Umfangsrichtung dazu versetzt einen zweiten Abstützabschnitt für eine innere der ineinander geschachtelten Schraubenfedern umfasst. An diesem zweiten Abstützbereich kann dann ein in die innere der Schraubenfedern eingreifender Haltevorsprung vorgesehen sein. Die Radialhalterung für die äußere der Schraubenfedern erfolgt dann durch den in Umfangsrichtung vorspringenden und in den Endbereich der äußeren der Schraubenfedern eingreifenden zweiten Abstützabschnitt.

Bei einer baulich besonders einfach zu realisierenden Ausgestaltungsform kann vorgesehen sein, dass wenigstens ein Haltevorsprung an dem Zentralscheibenelement oder/und wenigstens einem Deckscheibenelement integral ausgebildet ist. Alternativ ist es hierzu möglich, dass wenigstens ein Haltevorsprung an dem Zentralscheibenelement oder/und wenigstens einem Deckscheibenelement als separates Bauteil befestigt ist.

Die vorliegende Erfindung wird nachfolgend mit Bezug auf die beiliegenden Figuren detailliert beschrieben. Es zeigt:
- Fig.1 1: eine Teil-Querschnittdarstellung einer Torsionsschwingungsdämpferanordnung, geschnitten längs einer Linie 1-1 in Fig. 3;
- Fig. 2: eine Teil-Längsschnittansicht der Torsionsschwingungsdämpferanordnung der Fig. 1, geschnitten längs einer Linie II-II in Fig. 1;
- Fig. 3: eine Teil-Längsschnittansicht der Torsionsschwingungsdämpferanordnung der Fig. 1, geschnitten längs einer Linie III-III in Fig. 1;
- Fig. 4: die in den Kreisen IV in Fig. 1 enthaltenen Details vergrößert;
- Fig. 5: eine der Fig. 1 entsprechende Teil-Querschnittdarstellung einer alternativ ausgeführten Torsionsschwingungsdämpferanordnung;
- Fig. 6: eine der Fig. 1 entsprechende Teil-Querschnittdarstellung einer alternativ ausgeführten Torsionsschwingungsdämpferanordnung;
- Fig. 7: eine der Fig. 2 entsprechende Schnittdarstellung der in Fig. 6 gezeigten Torsionsschwingungsdämpferanordnung;
- Fig. 8: eine der Fig. 3 entsprechende Schnittdarstellung der in Fig. 6 entsprechenden Torsionsschwingungsdämpferanordnung;
- Fig. 9: die in den Kreisen IX in Fig. 6 enthaltenen Details vergrößert;
- Fig. 10: eine Teil-Querschnittdarstellung einer weiteren alternativ ausgestalteten Torsionsschwingungsdämpferanordnung;
- Fig. 11: eine Teil-Querschnittdarstellung einer weiteren alternativ ausgestalteten Torsionsschwingungsdämpferanordnung.

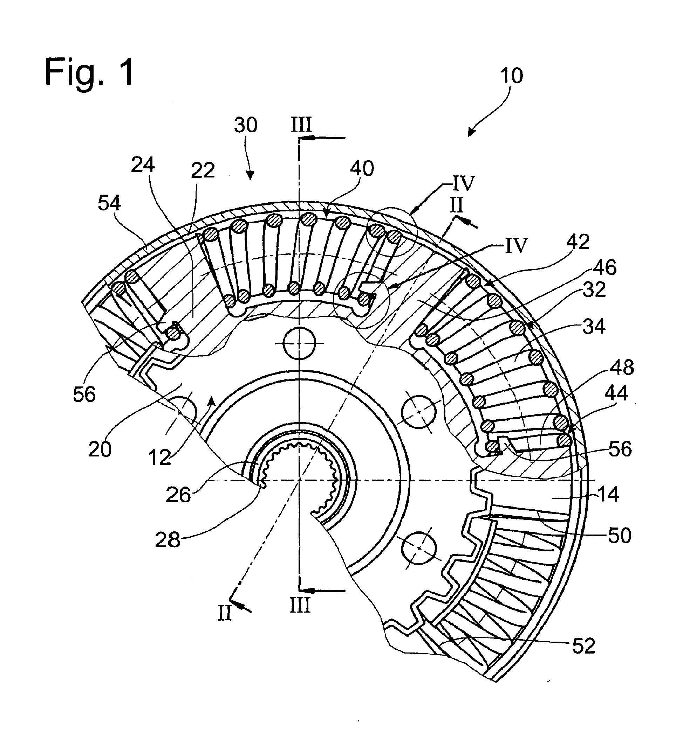

Die Fig. 1 bis 4 zeigen eine erste Ausgestaltungsform einer Torsionsschwingungsdämpferanordnung 10. Diese Torsionsschwingungsdämpferanordnung 10 kann im Antriebsstrang eines Kraftfahrzeugs eingesetzt werden. Beispielsweise kann sie in einer nasslaufenden Reibungskupplung zur Übertragung des Drehmoments auf eine Abtriebswelle, beispielsweise eine Getriebeeingangswelle, eingesetzt werden.

Die Torsionsschwingungsdämpferanordnung 10 umfasst eine Primärseite 12 mit zwei in Richtung einer Drehachse A im Abstand zueinander liegenden Deckscheibenelementen 14, 16. Die beiden Deckscheibenelemente sind im dargestellten Beispiel radial innen durch Nietbolzen 18 miteinander fest verbunden. Ferner ist durch die Nietbolzen 18 ein Lamellenträger 20 mit der Primärseite 12, d. h. den Deckscheibenelementen 14, 18, fest verbunden. An diesem Lamellenträger 20 können die abtriebsseitigen Reiblamellen einer nasslaufenden Reibungskupplung bzw. Lamellenkupplung drehfest gehalten werden.

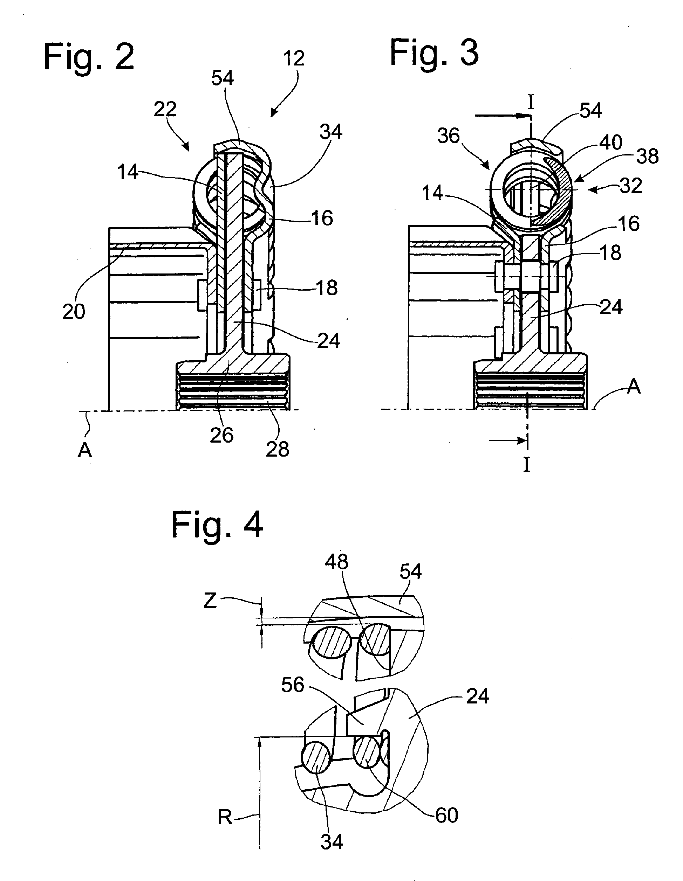

Der Torsionsschwingungsdämpfer 10 umfasst weiterhin eine Sekundärseite 22. Die Sekundärseite 22 umfasst ein Zentralscheibenelement 24, das axial zwischen den beiden Deckscheibenelementen 14, 16 liegt und radial innen beispielsweise integral mit einer Abtriebsnabe 26 verbunden ist. Diese kann über eine Innenverzahnung 28 drehfest an eine Abtriebswelle angekoppelt werden. Wie man in Fig. 3 erkennt, sind durch die Bolzen 18 die beiden Deckscheibenelemente 14, 16 so bezüglich einander festgelegt, dass der Abstand zwischen diesen zur Aufnahme des Zentralscheibenelements 24 ausreicht und dieses sich in einem begrenzten Drehwinkelbereich in Umfangsrichtung um die Drehachse A bezüglich der Deckscheibenelemente 14, 16 bewegen kann.

Um zwischen der Primärseite 12 und der Sekundärseite 22 ein Drehmoment übertragen zu können, ist eine allgemein mit 30 bezeichnete Dämpferelementenanordnung vorgesehen. Diese umfasst im dargestellten Beispiel sechs in Umfangsrichtung aufeinander folgende und näherungsweise in Umfangsrichtung sich erstreckende Dämpferelementeneinheiten 32 jeweils mit einer Schraubenfeder 34. In Zuordnung zu jeder Dämpferelementeneinheit 32 weisen die Deckscheibenelemente 14, 16 und das Zentralscheibenelement 24 so genannte Federfenster 36, 38, 40 auf. Jede Gruppe von Federfenstern 36, 38, 40 nimmt also eine Dämpferelementeneinheit 32 auf. In Umfangsrichtung sind diese Federfenster 36, 38, 40 begrenzt durch näherungsweise radial sich erstreckende Abstützbereiche, an welchen die Dämpferelementeneinheiten 32 bzw. die Schraubenfedern 34 mit ihren Umfangsendbereichen 42 bzw. 44 abgestützt bzw. abstützbar sind. Von diesen Abstützbereichen sind in der Fig. 1 die Abstützbereiche des Zentralscheibenelements 24 mit 46 bzw. 48 bezeichnet. Die Abstützbereiche der Deckscheibenelemente 14, 16, von welchen in der Fig. 1 lediglich das Deckscheibenelement 14 erkennbar sind, sind gleichermaßen mit 50, 52 bezeichnet. Weiterhin erkennt man noch, dass das Deckscheibenelement 16 sich nach radial außen über die Dämpferelementenanordnung 30 hinaus erstreckt und in einem diese vollständig umgebenden ringartigen Abschnitt 54 die Dämpferelementeneinheiten 32 radial außen übergreift.

Im Drehmomentübertragungszustand, also beispielsweise bei Einleitung eines Drehmoments in die Primärseite 12, werden die Schraubenfedern 34 in Umfangsrichtung belastet, so dass sie sich in einem ihrer Umfangsendbereiche 42, 44 an dem zugeordneten Abstützbereich 46 oder 48 des Zentralscheibenelements 24 abstützen und in ihrem anderen Umfangsendbereich sich an den zugeordneten Umfangsabstützabschnitten 50 btw. 52 der Deckscheibenelemente 14, 16 abstützen.

Um sicherzustellen, dass die Schraubenfedern 34 der Dämpferelementeneinheiten 32 in definierter radialer Positionierung gehalten sind und den in der Fig. 4 auch erkennbaren Abstand bzw. Zwischenraum Z zu dem Abschnitt 54 des Deckscheibenelements 16 beibehalten, sind am Zentralscheibenelement 24 integral ausgebildet Haltevorsprünge 56 vorgesehen. In dem in den Fig. 1 bis 4 dargestellten Beispiel erstrecken diese sich ausgehend jeweils von den den Umfangsendbereichen 44 der Schraubenfedern 34 zugeordneten Abstützbereichen 48 in die Schraubenfedern 34 hinein. Insbesondere erkennt man in Fig. 4, dass diese Haltevorsprünge 56 sich am bezogen auf die Drehachse A radial inneren Bereich der Schraubenfedern 34 mit einem derartigen Radialabstand R zur Drehachse A erstrecken, dass bei fliehkraftbedingter Abstützung eines radial innen liegenden Windungsbereichs 60 der Schraubenfedern 34 der Zwischenraum Z zum Abschnitt 54 des Deckscheibenelements 16 zuverlässig beibehalten bleibt.

Durch das Vorsehen dieser Haltevorsprünge 56 unmittelbar bzw. als integraler Bestandteil an den Abstützbereichen 48 des Zentralscheibenelements 24 wird der in Umfangsrichtung bereitgestellte Bauraum für die Dämpferelementeneinheiten 32 nicht durch irgendwelche zur Radialabstützung vorgesehene Maßnahmen beeinträchtigt. Dies bedeutet, dass vor allem dann, wenn, wie in Fig. 1 erkennbar, in Umfangsrichtung mehr als zwei Dämpferelementeneinheiten aufeinander folgen, nicht durch eine übermäßige Anzahl an Federtellern oder dergleichen eine elementare Beschränkung des Federvolumens erzeugt wird. Gleichwohl wird eine zuverlässige Radialsicherung erzeugt, die gekoppelt damit, dass die Umfangserstreckung der Dämpferelementen 32 vergleichsweise kurz ist, auch dafür sorgt, dass in Zwischenbereichen zwischen den Endbereichen 42, 44 der Dämpferelementeneinheiten 32 diese sich nicht fliehkraftbedingt nach radial außen gegen den Abschnitt 54 des Deckscheibenelements 16 anlegen werden.

Die Haltevorsprünge 56 können zur Zusammenwirkung mit den Schraubenfedern 44 mit einer abgerundeten Oberfläche oder einer gefasten Oberfläche ausgebildet sein, um einen flächigen Anlagekontakt zu erzeugen. Auch können sie in ihrer Umfangslänge so gestaltet sein, dass sie nicht nur eine, sondern auch mehrere der Federwindungen übergreifen. Weiterhin ist es selbstverständlich möglich, auch an den Deckscheibenelementen 14, 16 oder zumindest einem davon, beispielsweise dem Deckscheibenelement 14, welches sich im Wesentlichen radial und parallel zum Zentralscheibenelement 24 erstreckt, einen derartigen Haltevorsprung vorzusehen, so dass auch dann, wenn im Belastungszustand ein jeweiliger Endbereich der Dämpferelementeneinheiten 32 nur durch die Abstützbereiche der Deckscheibenelemente 14, 16 gestützt ist, eine Radialhalterungswirkung erzielt werden kann.

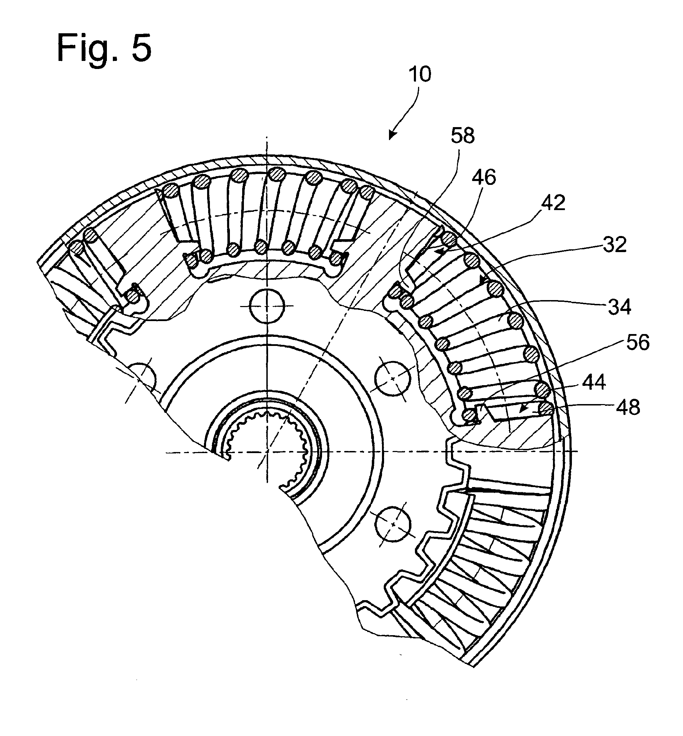

Während vorangehend mit Bezug auf die Fig. 1 bis 4 eine Ausgestaltungsform beschrieben wurde, bei welcher nur in Zuordnung zu jeweils einem der Umfangsendbereiche der Dämpferelementeneinheiten am Zentralscheibenelement oder ggf. den Deckscheibenelementen Haltevorsprünge vorgesehen sind, zeigt die Fig. 5 eine Ausgestaltungsvariante, bei welcher in Zuordnung zu beiden Umfangsendbereichen 42, 44 der Dämpferelementeneinheiten 32 bzw. der Schraubenfedern 34 derselben jeweils ein derartiger Haltevorsprung 56 bzw. 58 vorgesehen ist. Hiermit kann sichergestellt werden, dass unabhängig davon, in welcher Richtung ein Drehmoment eingeleitet wird, immer eine zuverlässige Radialsicherung an beiden Umfangsendbereichen 42, 44 erlangt wird. Entsprechendes gilt selbstverständlich auch für das Vorsehen derartiger Haltevorsprünge an einem oder beiden der Deckscheibenelemente 14, 16.

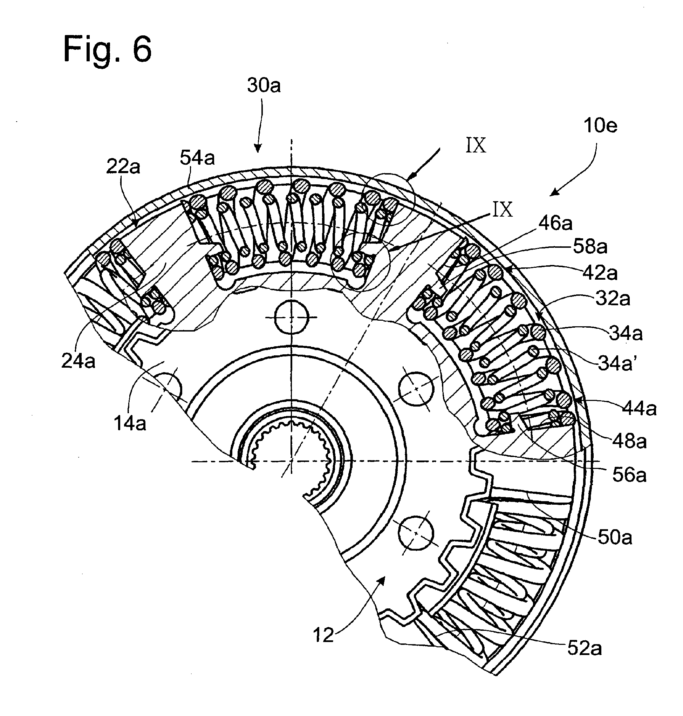

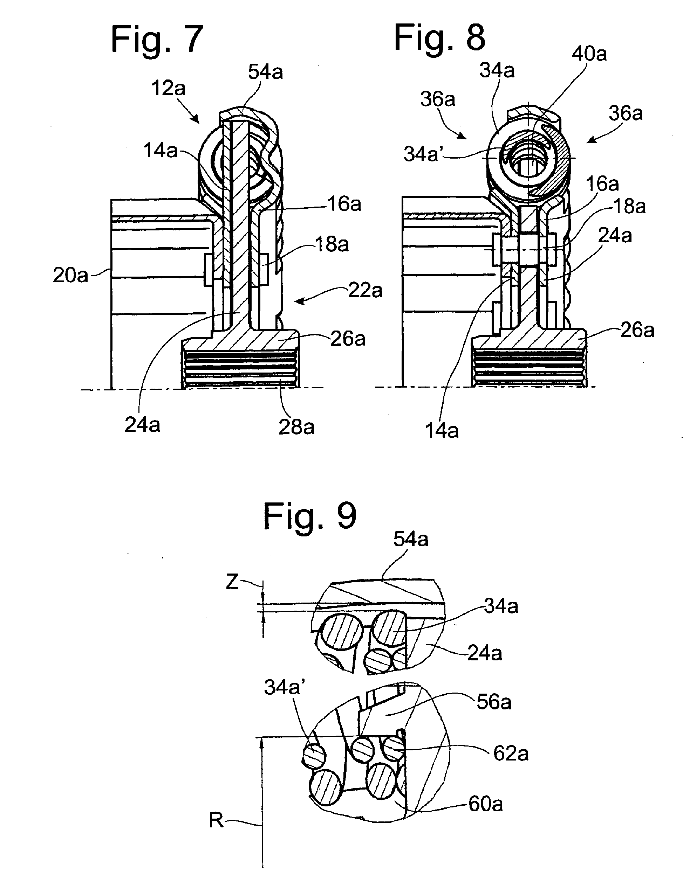

Die Fig. 6 bis 9 zeigen eine alternative Ausgestaltungsform einer Torsionsschwingungsdämpferanordnung. Hier sind Komponenten, welche vorangehend beschriebenen Komponenten hinsichtlich Aufbau bzw. Funktion entsprechen, mit dem gleichen Bezugszeichen unter Hinzufügung eines Anhangs "a" bezeichnet. Im Folgenden wird lediglich auf die zur vorangehend beschriebenen Ausgestaltungsform bestehenden Unterschiede eingegangen.

Man erkennt in Fig. 6, dass die Dämpferelementeneinheiten 32a jeweils zwei ineinander geschachtelte Schraubenfedern 34a, 34a' umfassen. Diese stützen sich mit ihren jeweils die Umfangsendbereiche 42a, 44a der Dämpferelementeneinheiten 32a bildenden Endbereichen an den Abstützbereichen 46a, 48a des Zentralscheibenelements 24a bzw. 50a, 52a der Deckscheibenelemente 14a, 16a ab. Hier ist also eine Parallelwirkung der jeweiligen Schraubenfedern 34a, 34a' bei den einzelnen Dämpferelementeneinheiten 32a vorgesehen.

Die Haltevorsprünge 56a bzw. 58a erstrecken sich ausgehend von den Abstützbereichen 46a, 48a des Zentralscheibenelements 24a wieder in die Umfangsendbereiche 42a, 44a hinein, und zwar derart, dass sie in die inneren der beiden ineinander geschachtelten Schraubenfedern 34a, 34a', also in die Schraubenfeder 34a', eingreifen und an einem radial inneren Windungsbereich 62a dieser Schraubenfedern 34a' angreifen. Da somit die inneren der ineinander geschachtelten Schraubenfedern 34a, 34a' durch die unmittelbare Zusammenwirkung mit den Haltevorsprüngen 56a bzw. 58a radial gesichert sind, sind auch die äußeren der Schraubenfedern 34a, 34a' radial gesichert, da sie sich unter Fliehkraftbelastung radial innen gegen die inneren Schraubenfedern 34a' anlegen werden. Auf diese Art und Weise kann wieder der Beibehalt des Zwischenraums Z sichergestellt werden.

Es sei auch hier darauf hingewiesen, dass selbstverständlich auch bei dieser Ausgestaltungsvariante nur in einem der Umfangsendbereiche der Dämpferelementeneinheiten 32a jeweils Haltevorsprünge vorgesehen sein können. Auch ist es möglich, derartige Haltevorsprünge alternativ oder zusätzlich auch an einem oder beiden der Deckscheibenelemente 14a, 16a vorzusehen.

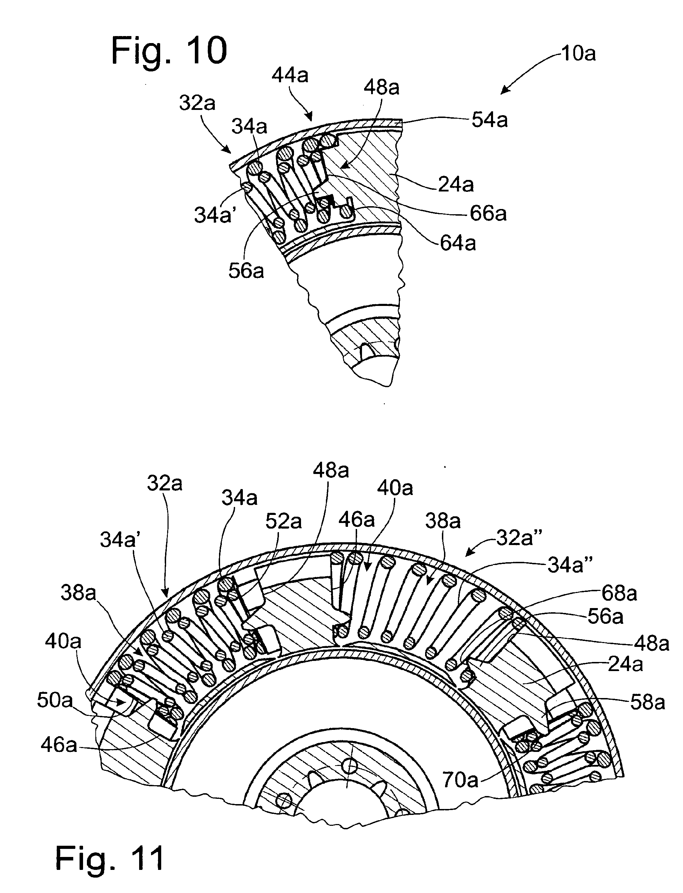

Eine Abwandlung dieser Ausgestaltungsform ist in Fig. 10 gezeigt. Man erkennt hier anhand des Abstützbereichs 48a, dass dieser bzw. beide einer jeweiligen Dämpferelementeneinheit 32a zugeordnete Abstützbereiche mit einem ersten Abstützabschnitt 64a ausgebildet sein kann, an welchem die äußere der beiden ineinander geschachtelten Schraubenfedern 34a, 34a', also die Schraubenfeder 34a, in Umfangsrichtung abgestützt ist. Ein zweiter Abstützabschnitt 66a liegt in Umfangsrichtung versetzt zum ersten Abstützabschnitt 64a und greift somit in das Ende der äußeren Schraubenfeder 34a ein. An diesem zweiten Abstützabschnitt 66a ist die innere Schraubenfeder 34a' abgestützt. Auf diese Art und Weise ist bereits für die äußere Schraubenfeder 34a durch den im Umfangsrichtung vorspringenden Abstützabschnitt 66a eine Radialsicherungsfunktion erfüllt. Weiterhin ist in Zuordnung zur inneren Schraubenfeder 34a' wieder ein Haltevorsprung 56a vorgesehen, welcher eine Radialsicherungsfunktion zusätzlich für diese innere Schraubenfeder 56a erfüllt. Auf diese Art und Weise können die beiden Schraubenfedern 34a, 34a' unabhängig voneinander und vor allem auch ohne gegenseitigen Anlagekontakt gehaltert bzw. radial gesichert werden.

Eine weitere Abwandlung ist in Fig. 11 gezeigt. Hier erkennt man, dass in Umfangsrichtung alternierend Dämpferelementeneinheiten 32a mit zwei ineinander geschachtelten Schraubenfedern 34a, 34a' und Dämpferelementeneinheiten 32a" mit jeweils nur einer Schraubenfeder 34a" vorgesehen sind. Diese kann beispielsweise der äußeren Schraubenfeder 34a der Dämpferelementeneinheiten 32a entsprechen. Die Ausgestaltung ist weiterhin derart, dass die an den Deckscheibenelementen 14a, 16a für die Dämpferelementeneinheiten 32a gebildeten Federfenster 36a, 38a eine kürzere Umfangserstreckung aufweisen, als die entsprechenden Federfenster 40a des Zentralscheibenelements. Die für die Dämpferelementeneinheiten 32a" gebildeten Federfenster 36a, 38a der Deckscheibenelemente 14a, 16a weisen die gleiche Umfangserstreckung auf, wie die für diese Dämpferelementeneinheiten 32a" vorgesehenen Federfenster 40a des Zentralscheibenelements 24a. Dies bedeutet, dass in dem in Fig. 11 dargestellten nicht belasteten Zustand die Schraubenfedern 34a, 34a' der Dämpferelementeneinheiten 32a nur zwischen den Abstützbereichen 50a, 52a der Deckscheibenelemente 14a, 16a komprimiert sind, nicht jedoch in Kontakt sind mit den entsprechenden Abstützbereichen 46a, 48a des Zentralscheibenelements 24a. Bei Umfangsbelastung bewegen die Primärseite 12a und die Sekundärseite 22a sich nur unter Kompression der Schraubenfedern 34a" der Dämpferelementeneinheiten 32a", und zwar so lange, bis einer der Abstützbereiche 46a, 48a der Dämpferelementeneinheiten 32a in Kontakt mit den Schraubenfedern 34a, 34a' dieser Dämpferelementeneinheiten 32a kommt. Die weitergehende Umfangsrelativbewegung wird dann zusätzlich auch gegen die Vorspannkraft bzw. Rückstellkraft der Dämpferelementeneinheiten 32a erfolgen. Hier ist also ein gestufter Betrieb vorgesehen, bei dem geringere Umfangsrelativbewegungen gegen eine deutlich geringere Federkraft ablaufen und erst bei Überschreiten eines bestimmten Relativdrehwinkels dann ein Anstieg in der Rückstellkraft durch das zusätzliche Wirksamwerden der Dämpferelementeneinheiten 32a erfolgt.

Es sei darauf hingewiesen, dass hinsichtlich der Ausgestaltung und Positionierung der Haltevorsprünge 56a, 58a die gleichen Variationsmöglichkeiten bestehen, wie vorangehend beschrieben. Weiterhin sei noch erwähnt, dass man in Fig. 11 erkennt, dass die Haltevorsprünge 56a, 58a in Umfangsrichtung gerichtet Einführschrägen 68a bzw. 70a aufweisen können, so dass dann, wenn sie sich in Umfangsrichtung in einen jeweiligen Endbereich einer Dämpferelementeneinheit hinein bewegen, geringe Fehlausrichtungen in radialer Richtung kompensiert werden können.

## Patentansprüche

1. Torsionsschwingungsdämpferanordnung, umfassend eine Primärseite (12; 12a) und eine vermittels einer Dämpferelementenanordnung (30; 30a) zur Drehmomentübertragung mit der Primärseite (12; 12a) und zur Drehung bezüglich der Primärseite (12; 12a) um eine Drehachse (A) gekoppelte Sekundärseite (22; 22a), wobei eine Seite von Primärseite (12; 12a) und Sekundärseite (22; 22a) ein Zentralscheibenelement (24; 24a) umfasst und die andere Seite von Primärseite (12; 12a) und Sekundärseite (22; 22a) beidseits des Zentralscheibenelements (24; 24a) miteinander fest verbundene Deckscheibenelemente (14, 16; 14a, 16a) umfasst, wobei die Dämpferelementenanordnung (30; 30a) eine Mehrzahl von in Umfangsrichtung aufeinander folgenden und sich näherungsweise in Umfangsrichtung erstreckenden Dämpferelementeneinheiten (32; 32a) umfasst und wobei an dem Zentralscheibenelement (24; 24a) und den Deckscheibenelementen (14, 16; 14a, 16a) für jede Dämpferelementeneinheit (32; 32a) zwei in Umfangsrichtung in Abstand zueinander liegende Abstützbereiche (46, 48, 50, 52; 46a, 48a, 50a, 52a) vorgesehen sind, an welchen eine jeweilige Dämpferelementeneinheit (32; 32a) mit ihren Umfangsendbereichen (42, 44; 42a, 44a) abgestützt ist, wobei am Zentralscheibenelement (24; 24a) oder/und wenigstens einem Deckscheibenelement (14, 16; 14a, 16a) bei wenigstens einem der einer jeweiligen Dämpferelementeneinheit (32; 32a) zugeordneten Abstützbereiche (46, 48, 50, 52; 46a, 48a, 50a, 52a) ein bei Abstützung der Dämpferelementeneinheit (32; 32a) an diesem Abstützbereich (46, 48, 50, 52; 46a, 48a, 50a, 52a) die Dämpferelementeneinheit (32; 32a) gegen Bewegung nach radial außen sichernder Haltevorsprung (56, 56; 56a, 58a) vorgesehen ist.

2. Torsionsschwingungsdämpferanordnung nach Anspruch 1,
**dadurch gekennzeichnet, dass** an beiden einer jeweiligen Dämpferelementeneinheit (32; 32a) zugeordneten Abstützbereichen (46, 48, 50, 52; 46a, 48a, 50a, 52a) jeweils ein Haltevorsprung (56, 58; 56a, 58a) vorgesehen ist.

3. Torsionsschwingungsdämpferanordnung nach Anspruch 1 oder 2,
**dadurch gekennzeichnet, dass** die Dämpferelementeneinheiten (32; 32a) jeweils wenigstens eine Schraubenfeder (34; 34a, 34a', 34a") umfassen und dass die Haltevorsprünge (56, 58; 56a, 58a) in einen jeweiligen Endbereich der Schraubenfedern (34; 34a, 34a', 34") eingreifen.

4. Torsionsschwingungsdämpferanordnung nach Anspruch 3,
**dadurch gekennzeichnet, dass** die Haltevorsprünge (56, 58; 56a, 58a) an einem bezogen auf die Drehachse radial inneren Windungsbereich (60, 62a) der Schraubenfedern (34; 34a', 34a") angreifen.

5. Torsionsschwingungsdämpferanordnung nach Anspruch 3 oder 4,
**dadurch gekennzeichnet, dass** wenigstens eine Dämpferelementeneinheit (32a) wenigstens zwei ineinander geschachtelte Schraubenfedern (34a, 34a') umfasst und dass wenigstens ein dieser Dämpferelementeneinheit (32a) zugeordneter Haltevorsprung (56a, 58a) in die innerste der ineinander geschachtelten Schraubenfedern (34a, 34a') eingreift und diese gegen Radialbewegung sichert.

6. Torsionsschwingungsdämpferanordnung nach Anspruch 3 oder 4,
**dadurch gekennzeichnet, dass** wenigstens eine Dämpferelementeneinheit (32a) wenigstens zwei ineinander geschachtelte Schraubenfedern (34a, 34a') umfasst und dass wenigstens ein dieser Dämpferelementeneinheit (32a) zugeordneter Haltevorsprung (56a, 58a) in die äußerste der ineinander geschachtelten Schraubenfedern eingreift und diese gegen Radialbewegung sichert.

7. Torsionsschwingungsdämpferanordnung nach Anspruch 3 oder 4,
**dadurch gekennzeichnet, dass** wenigstens eine Dämpferelementeneinheit (32a) wenigstens zwei ineinander geschachtelte Schraubenfedern (34a, 34a') umfasst, wobei wenigstens ein dieser Dämpferelementeneinheit (32a) zugeordneter Abstützbereich (48a) einen ersten Abstützabschnitt (64a) für eine äußere der Schraubenfedern (34a, 34a') und in Umfangsrichtung dazu versetzt einen zweiten Abstützabschnitt (66a) für eine innere der Schraubenfedern (34a, 34a') umfasst, und dass am zweiten Abstützabschnitt (66a) ein in die innere der Schraubenfedern (34a, 34a') eingreifender Haltevorsprung (56a) vorgesehen ist.

8. Torsionsschwingungsdämpferanordnung nach einem der Ansprüche 1 bis 7,
**dadurch gekennzeichnet, dass** wenigstens ein Haltevorsprung (56, 58; 56a, 58a) an dem Zentralscheibenelement (24; 24a) oder/und wenigstens einem Deckscheibenelement (14, 16; 14a, 16a) integral ausgebildet ist.

9. Torsionsschwingungsdämpferanordnung nach einem der Ansprüche 1 bis 8,
**dadurch gekennzeichnet, dass** wenigstens ein Haltevorsprung an dem Zentralscheibenelement oder/und wenigstens einem Deckscheibenelement als separates Bauteil befestigt ist.
